# EUROPEAN PATENT SPECIFICATION

(11) **EP 4 273 014 B1**
(45) Date of publication and mention of the grant of the patent: **12.02.2025**
(21) Application number: 23163738.0
(22) Date of filing: 23.03.2023
(51) Int. Cl.: B60W 40/09, G06Q 40/08, G06Q 10/0639, G06Q 50/40, G06Q 50/26, B60W 50/00

(54) **INDIVIDUAL CHARACTERISTICS MANAGEMENT SYSTEM**
SYSTEM ZUR VERWALTUNG INDIVIDUELLER EIGENSCHAFTEN
SYSTÈME DE GESTION DE CARACTÉRISTIQUES INDIVIDUELLES

(30) Priority: 02.05.2022 JP 2022076206
(43) Date of publication of application: 08.11.2023
(73) Proprietor: TOYOTA JIDOSHA KABUSHIKI KAISHA, Aichi-Ken 471-8571 (JP)
(72) Inventor: ENDO, Masato, Toyota-shi, 471-8571 (JP); MANABE, Shuhei, Toyota-shi, 471-8571 (JP)
(74) Representative: J A Kemp LLP

(56) References cited:
- US-A1- 2018 345 985
- US-A1- 2020 216 094
- US-B2- 10 611 380

## Description

### BACKGROUND

### Technical Field

The present invention relates to an individual characteristics management system.

### Related Art

Japanese Patent Application Laid-Open (JP-A) No. 2007-327872 discloses a driver personality judging device that judges a "degree of impatience" in accordance with the relative frequency of times of refueling, and judges the "adherence to regulations" from the traveling history of the vehicle.

The device disclosed in JP-A No. 2007-327872 can only estimate simple individual characteristics. On the other hand, a method has been conceived of in which detailed individual characteristics are estimated by carrying out computation at a server external to the vehicle or the like, in accordance with the driving state of the user. However, because there is a large amount of communication between the vehicle and the server, there is the possibility that the processing load at the vehicle side will increase.

US 2018/345985 discloses a management system in accordance with the precharacterising section of claim 1.

US 10,611,380 discloses a method for assessing the trip performance of a driver.

### SUMMARY

The present invention provides an individual characteristics management system, which can obtain detailed individual characteristics while reducing the processing load at the vehicle side.

A first aspect of the present invention is an individual characteristics management system including: first storage installed at a vehicle and storing first data relating to individual characteristics of a user; second storage provided at an exterior of the vehicle and storing second data relating to the individual characteristics; and a controller updating the first data and the second data respectively based on a driving state of the user, wherein the controller updates, during driving by the user and based on a driving vehicle, the first data stored in the first storage, and updates the second data based on the updated first data and the second data stored in the second storage, characterised in that:
the controller updates the second data in a case in which the vehicle is stopped; and
in a case in which the vehicle is stopped, the controller transmits to the second storage only data, which was updated during driving, from among the first data.

In the individual characteristics management system of the first aspect, the first storage that is installed in a vehicle, and the second storage that is provided at the exterior of the vehicle. First data relating to individual characteristics of a user is stored in the first storage, and second data relating to the individual characteristics of the user is stored in the second storage. The first data and the second data are respectively updated by the controller based on the driving state of the user. Here, during driving by the user, the controller updates the first data based on the driving vehicle. In this way, by installing the first storage in the vehicle, the processing load on the vehicle at the time of referencing the individual characteristics can be reduced as compared with a structure in which all of the data relating to the individual characteristics is stored at the exterior of the vehicle.

Further, the controller updates the second data based on the updated first data and the second data that is stored in the second storage. Due thereto, the second data, which relates to the individual characteristics and is stored in the second storage that is at the exterior of the vehicle, can be updated periodically, and detailed individual characteristics can be obtained based on this second data. Note that what is called the "driving state" here is not limited to driving operations of the vehicle such as accelerating, braking, steering and the like. "Driving state" is a broad concept encompassing states of the vehicle during driving and states of the driver (the user) during driving.

In the individual characteristics management system of the first aspect, because the second data is updated in a case in which the vehicle is stopped, the first data can be transmitted to the second storage in a state in which communication for vehicle control is not being carried out. Note that what is called "when the vehicle is stopped" here is not limited to a case in which the speed of the vehicle has become zero. For example, "when the vehicle is stopped" includes cases in which the power of the vehicle is turned off.

In an individual characteristics management system of a first aspect, at a time of stoppage of the vehicle, the controller transmits to the second storage only data, which was updated during driving, among the first data.

In the individual characteristics management system of the first aspect, only the first data that was updated during driving is transmitted to the second storage. Therefore, at the time when the vehicle is stopped, the amount of communication between the vehicle and the second storage can be kept to the minimum needed.

In an individual characteristics management system of a second aspect, in the first aspect, the controller updates the first data by inputting driving data, which is obtained from sensors during driving, to a learned model on which machine learning has been carried out, and executing computing processing of the learned model.

In the individual characteristics management system of the second aspect, by updating the first data by using a learned model on which machine learning has been carried out, the individual characteristics can be obtained highly accurately without requiring complex computation.

In the individual characteristics management system detailed individual characteristics can be obtained while the processing load at the vehicle side is reduced.

### BRIEF DESCRIPTION OF THE DRAWINGS

An exemplary embodiment of the present invention will be described in detail based on the following figures, wherein:
Fig. 1 is a schematic drawing illustrating the overall structure of an individual characteristics management system relating to an embodiment;
Fig. 2 is a block drawing illustrating hardware structures of an individual characteristics management device relating to the embodiment;
Fig. 3 is a block drawing illustrating hardware structures of an onboard device relating to the embodiment;
Fig. 4 is a block drawing illustrating functional structures of the individual characteristics management device relating to the embodiment;
Fig. 5 is a block drawing for explaining a learning phase in the embodiment;
Fig. 6 is a table illustrating examples of driving evaluation items;
Fig. 7 is a table illustrating examples of driving characteristics and a cognitive characteristic; and
Fig. 8 is a flowchart illustrating an example of the flow of updating processing in the embodiment.

### DETAILED DESCRIPTION

An individual characteristics management system S that includes an individual characteristics management device 10 relating to an embodiment is described with reference to the drawings.

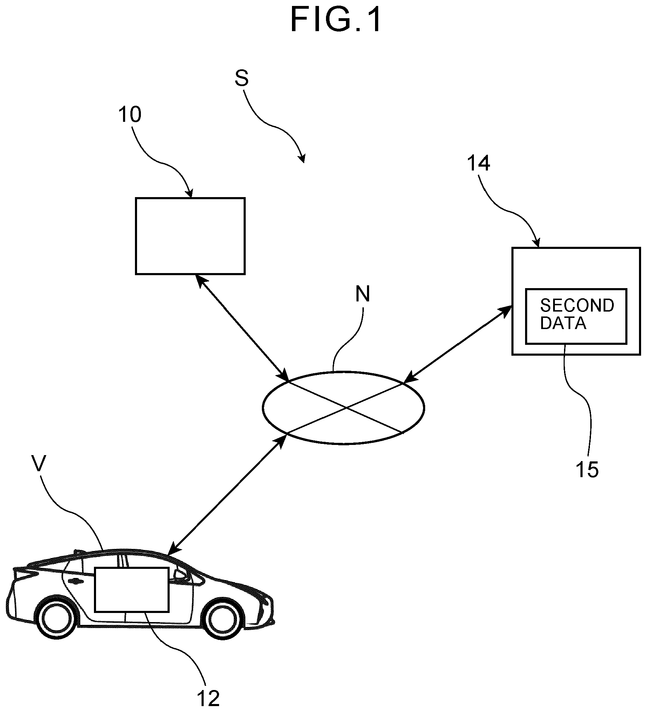

As illustrated in Fig. 1, the individual characteristics management system S of the present embodiment is structured to include the individual characteristics management device 10, vehicles V provided with onboard devices 12, and a server 14. The individual characteristics management device 10, the vehicles V and the server 14 are connected by network N. Note that, although the plural vehicles V are connected to the network N, only the one vehicle V is illustrated in Fig. 1 for convenience of explanation.

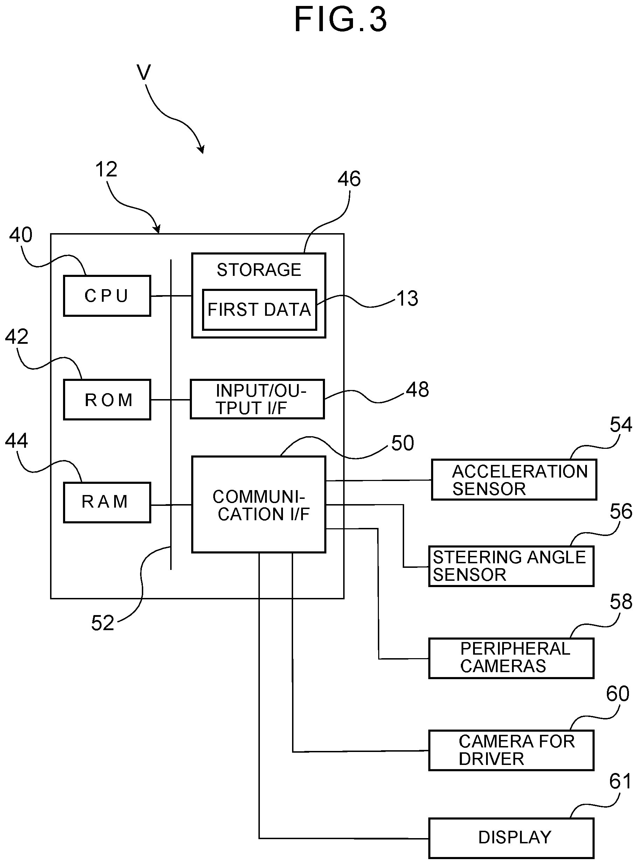

A control device that is provided at the exterior of the vehicle V is an example of the individual characteristics management device 10 of the present embodiment. A storage 46 serving as a first storage is provided at the onboard device 12 that is installed in the vehicle V, and first data 13 relating to individual characteristics is stored in the storage 46 (see Fig. 3).

The server 14 is provided at the exterior of the vehicles V, and is possessed by the manager of the plural vehicles V. Further, second data 15 relating to the individual characteristics is stored in the server 14. Namely, the server 14 corresponds to the "second storage" of the present invention. The manager who manages the plural vehicles V possesses the server 14, and, in the present embodiment, as an example, the vehicles V are vehicles that are used as taxis that users ride and travel in. Further, the server 14 is possessed by a taxi company.

Here, the individual characteristics management system S of the present embodiment updates the first data 13, which relates to individual characteristics of the user and is stored in the storage 46, during driving by the user and based on a driving state. Further, the individual characteristics management system S of the present embodiment updates the second data 15 based on the updated first data 13 and the second data 15 that is stored in the server 14.

### (Hardware Structures of Individual characteristics management Device 10)

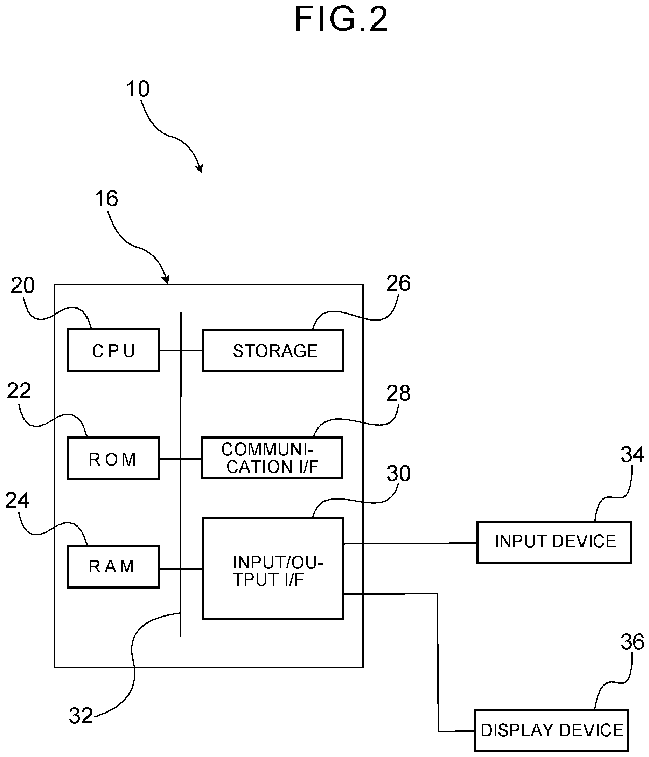

Fig. 2 is a block drawing illustrating hardware structures of the individual characteristics management device 10. As illustrated in Fig. 2, the individual characteristics management device 10 has an ECU (Electronic Control Unit) 16 serving as a controller. The ECU 16 is structured to include a CPU (Central Processing Unit: processor) 20, a ROM (Read Only Memory) 22, a RAM (Random Access Memory) 24, a storage 26, a communication I/F (communication interface) 28 and an input/output I/F (input/output interface) 30. These respective structures are connected so as to be able to communicate with one another via bus 32.

The CPU 20 is a central computing processing unit, and executes various programs and controls respective sections. Namely, the CPU 20 reads-out a program from the ROM 22 or the storage 26, and executes the program by using the RAM 24 as a workspace. The CPU 20 carries out control of the above-described respective structures, and various types of computing processings, in accordance with programs that are recorded in the ROM 22 or the storage 26.

The ROM 22 stores various programs and various data. The RAM 24 temporarily stores programs and data as a workspace. The storage 26 is structured by an HDD (Hard Disk Drive) or an SSD (Solid State Drive), and stores various programs, including the operating system, and various data. In the present embodiment, a program for carrying out updating processing of the individual characteristics, and various data and the like are stored in the ROM 22 or the storage 26.

The communication I/F 28 is an interface for the individual characteristics management device 10 to communicate with the server 14 and other equipment, and standards such as, for example, CAN (Controller Area Network), Ethernet^{®}, LTE (Long Term Evolution), FDDI (Fiber Distributed Data Interface), Wi-Fi^{®}, or the like are used thereat.

The input/output I/F 30 is electrically connected to an input device 34 and a display device 36. The input device 34 is a device for inputting predetermined instructions to the individual characteristics management device 10, and is structured to include, for example, a mouse and a keyboard and the like. The display device 36 is a device such as a display or the like for displaying information outputted from the individual characteristics management device 10.

### (Hardware Structures of Onboard Device 12)

Fig. 3 is a block drawing illustrating hardware structures of the onboard device 12. As illustrated in Fig. 3, the onboard device 12 is structured to include a CPU (Central Processing Unit: processor) 40, a ROM (Read Only Memory) 42, a RAM (Random Access Memory) 44, the storage 46 serving as the first storage, a communication I/F (communication interface) 48 and an input/output I/F (input/output interface) 50. These respective structures are connected so as to be able to communicate with one another via bus 52.

The CPU 40 is a central computing processing unit, and executes various programs and controls respective sections. Namely, the CPU 40 reads-out a program from the ROM 42 or the storage 46, and executes the program by using the RAM 44 as a workspace. The CPU 40 carries out control of the above-described respective structures, and various types of computing processings, in accordance with programs that are recorded in the ROM 42 or the storage 46.

The ROM 42 stores various programs and various data. The RAM 44 temporarily stores programs and data as a workspace. The storage 46 is structured by an HDD (Hard Disk Drive) or an SSD (Solid State Drive), and stores various programs, including the operating system, and various data. In the present embodiment, programs for carrying out various processings, and various data and the like are stored in the ROM 42 or the storage 46.

Further, the first data 13 that relates to individual characteristics of the user is stored in the storage 46 of the present embodiment. Details of the first data 13 are described later.

The communication I/F 48 is an interface for the onboard device 12 to communicate with the server 14 and other equipment, and standards such as, for example, CAN, Ethernet^{®}, LTE, FDDI, Wi-Fi^{®}, or the like are used thereat.

The input/output I/F 50 is electrically connected to an acceleration sensor 54, a steering angle sensor 56, peripheral cameras 58, a camera 60 for the driver, and a display 61.

The acceleration sensor 54 detects the acceleration of the vehicle V. The steering angle sensor 56 detects the steering angle of the vehicle V. The data of the acceleration that is sensed by the acceleration sensor 54 is used, for example, in order to judge the absence/presence of sudden acceleration of the vehicle V. Further, the data of the steering angle that is sensed by the steering angle sensor 56 is used, for example, in order to judge the absence/presence of sudden steering or a U-turn. Note that the amounts of operation of the accelerator pedal and the brake pedal or the like may be detected directly from sensors such as an accelerator position sensor and a brake sensor or the like, instead of the acceleration sensor 54.

The peripheral cameras 58 are provided at the periphery of the vehicle V, and capture images of the surroundings of the vehicle V. For example, the peripheral cameras 58 are structured to include a front camera that captures images of the region in front of the vehicle V, a rear camera that captures images of the region at the rear of the vehicle V, side cameras that capture images of the regions at the lateral sides of the vehicle V, and the like. Further, the image data captured by the peripheral cameras 58 is used, for example, in order to calculate the inter-vehicle distance between the vehicle V and a preceding vehicle. Further, the image data captured by the peripheral cameras 58 is used, for example, in order to detect signs.

The camera 60 for the driver is a camera for capturing images of the driver, and is provided at the instrument panel for example, and is disposed so as to face the driver. The image data captured by the camera 60 for the driver is used, for example, in order to detect driving while taking one's eyes off the road, or the like.

The display 61 is provided at the instrument panel of the vehicle V, and displays information to the user at predetermined times. For example, advice relating to driving that is suited to the user, and the like, are displayed based on the first data 13.

### (Functional Structures of Individual characteristics management Device 10)

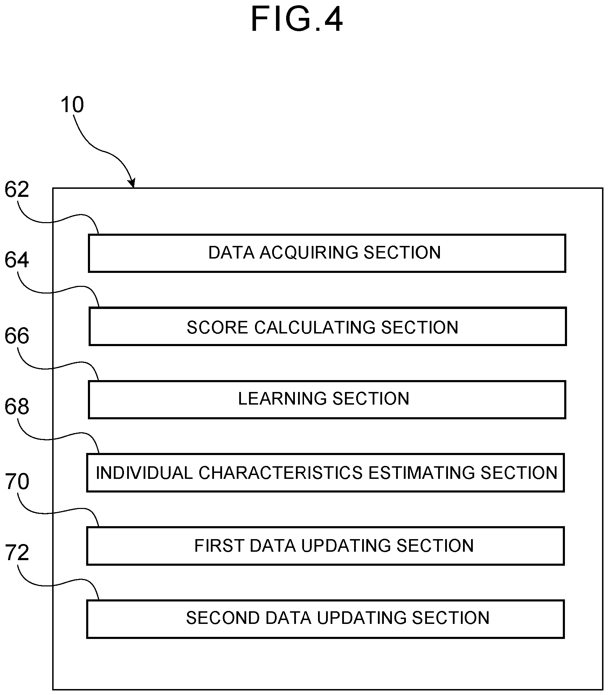

The individual characteristics management device 10 realizes various functions by using the above-described hardware resources. The functional structures that are realized by the individual characteristics management device 10 are described with reference to Fig. 4.

As illustrated in Fig. 4, the individual characteristics management device 10 is structured to include, as the functional structures thereof, a data acquiring section 62, a score calculating section 64, a learning section 66, an individual characteristics estimating section 68, a first data updating section 70 and a second data updating section 72. Note that these respective functional structures are realized due to the CPU 20 reading-out a program stored in the ROM 22 or the storage 26 and executing the program.

The data acquiring section 62 acquires driving data that relates to plural driving evaluation items that are set in advance. In the present embodiment, as an example, driving data are transmitted from the vehicle V to the server 14, and the driving data are accumulated in the server 14. Therefore, the data acquiring section 62 acquires driving data from the server 14. The driving data acquired by the data acquiring section 62 is, for example, information relating to the acceleration and steering of the vehicle V, information captured by the peripheral cameras 58, information captured by the camera 60 for the driver, and the like. Further, the data acquiring section 62 acquires, as driving data, data that includes scores and numbers of times of measurement that are calculated by the score calculating section 64.

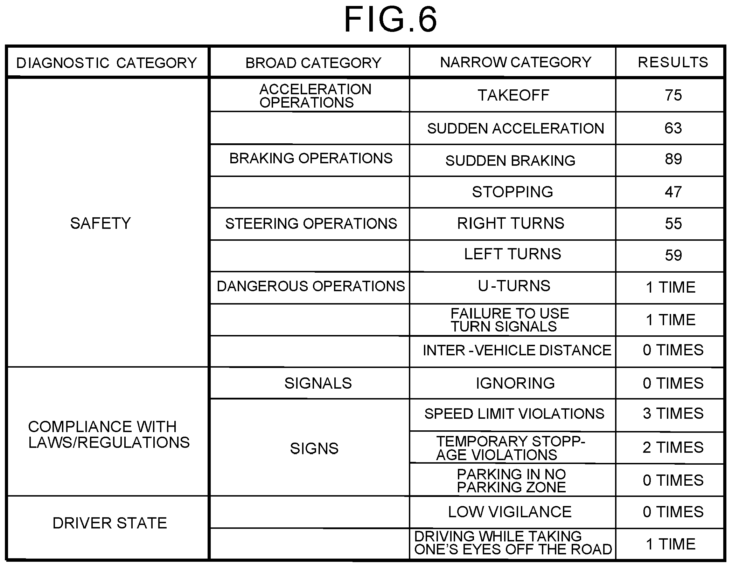

Based on the driving data acquired by the data acquiring section 62, the score calculating section 64 carries out calculating of the score or measurement of the number of times, for each of the driving evaluation items. Here, an example of the driving evaluation items is described with reference to Fig. 6.

As illustrated in Fig. 6, in the present embodiment, as an example, the diagnostic categories of the driving evaluation items are divided into safety, compliance with laws/regulations, and driver state.

The diagnostic category that is safety is divided into acceleration operations, braking operations, steering operations, and dangerous operations. Takeoff and sudden acceleration are respectively evaluated as acceleration operations. Specifically, in the takeoff item, the acceleration operation from a stopped state of the vehicle V until a predetermined speed is reached is evaluated based on data sensed by the acceleration sensor 54 provided at the vehicle V. Further, a score from 0 to 100 is calculated as the evaluation of the takeoff. Scores from 0 to 100 are similarly calculated for the evaluations of sudden acceleration, sudden braking, stopping, right turn, and left turn.

For example, the score for the takeoff item may be calculated based on the time from the stopped state of the vehicle V until a predetermined speed is reached, and the amount of change in the acceleration during the time until the predetermined speed is reached. Further, the score for the most ideal takeoff state may be set to be 100, and the score for the takeoff state in which the accelerator is fully opened from the stopped state may be set to be 0, and the score may be calculated by comparison with the actual takeoff state.

The degree to which sudden acceleration is carried out is calculated as the score for the item of sudden acceleration. For example, the score may be calculated to be low in a case in which the amount of increase in the acceleration in a relatively short time is large, based on the acceleration sensed by the acceleration sensor 54 provided at the vehicle V.

Evaluation of both sudden braking and stopping is carried out for the braking operations. For the sudden braking item, the degree to which sudden braking is carried out is calculated as the score. For example, the score may be calculated to be low in a case in which the amount of decrease in the acceleration in a relatively short time is large, based on the data sensed by the acceleration sensor 54 provided at the vehicle V. Further, for the stopping item, the score may be calculated based on the time until the vehicle V stops from a predetermined speed, and the amount of change in the acceleration during the time period until the vehicle V stops.

Both right turns and left turns are evaluated as steering operations. For example, for the item of right turns, the score may be set based on the steering angle of the vehicle V sensed by the steering angle sensor 56 such that, the closer that the amount of change in the steering angle during a predetermined time period is to a preset ideal state, the higher the score. For the item of left turns as well, the score is calculated similarly to the right turns item.

U-turns, failure to use turn signals, and inter-vehicle distance are respectively evaluated as dangerous operations. These items do not have scores, and are evaluated based on the number of times of detection.

For the U-turn item, the number of times that a U-turn is carried out is counted. For example, it may be judged that a U-turn has been carried out based on the steering angle of the vehicle V sensed by the steering angle sensor 56 and the traveled distance. For the item that is failure to use turn signals, the number of times that a turn signal light was not turned on before a left or right turn is counted. For example, in a state in which it is judged that a left or right turn has been carried out based on the steering angle of the vehicle V sensed by the steering angle sensor 56, if an unillustrated turn signal switch installed in the vehicle V was not turned on in advance thereof, it may be judged that there was failure to use a turn signal.

For the inter-vehicle distance item, the number of times that the inter-vehicle distance to the preceding vehicle became short is counted. For example, in a case in which the inter-vehicle distance between the vehicle V and the preceding vehicle that is calculated based on image data captured by the peripheral cameras 58 is less than or equal to a predetermined inter-vehicle distance, it may be judged that the inter-vehicle distance to the preceding vehicle has become short.

The diagnostic category of compliance with laws/regulations is divided into signals and signs. For signals, the number of times that a signal was ignored is counted. For signs, evaluation is carried out for each of violating the speed limit, violating a temporary stoppage regulation, and parking in a no parking zone.

For the speed limit item, the number of times that the speed limit was exceeded is counted. For example, based on the image data captured by the peripheral cameras 58, speed limits displayed on signs are detected, and, if the vehicle speed detected by an unillustrated vehicle speed sensor installed in the vehicle V is greater than the speed limit, it may be judged that the speed limit has been exceeded.

For the item of violating a temporary stoppage regulation, the number of times that the vehicle V did not stop at a position where temporary stoppage is mandated is counted. For example, signs prescribing temporary stoppage may be detected based on the image data captured by the peripheral cameras 58, and, if the vehicle speed is not 0 at a position of temporary stoppage, it may be judged that there is a temporary stoppage violation.

For the item of parking in a no parking zone, the number of times that parking in a no parking zone was carried out is counted. For example, based on the image data captured by the peripheral cameras 58, no parking signs may be detected, and, if the shift position is set to park at a place where parking is prohibited, it may be judged that there is a no parking violation. Note that, for the item of speed limit violations, instead of a method of detecting signs based on the image data captured by the peripheral cameras 58, speed limit information of the road on which the vehicle V is traveling may be acquired from the current position of the vehicle V and information registered in the navigation system. Similarly, places of temporary stoppage and no parking may be sensed from the current position of the vehicle V and information registered in the navigation system. Note that current position information of the vehicle V is acquired based on radio waves received by an unillustrated GPS (Global Positioning System) device that is installed in the vehicle V.

In the diagnostic category of driver state, items that are low vigilance and driving while taking one's eyes off the road are both evaluated. For the low vigilance item, the number of times that it was judged that the vigilance of the driver was low is counted. For example, the degree of vigilance of the driver may be calculated based on image data of the face of the driver captured by the camera 60 for the driver, and, if the degree of vigilance is lower than a preset threshold value, it may be judged that the level of vigilance is low.

For the item of driving while taking one's eyes off the road, the number of times that the driver looked away during driving is counted. For example, the sightline direction of the driver may be detected from image data of the face of the driver captured by the camera 60 for the driver, and, if the sightline direction of the driver is directed in a direction different than the advancing direction for a predetermined time period or more, it may be judged that driving while taking one's eyes off the road is being carried out.

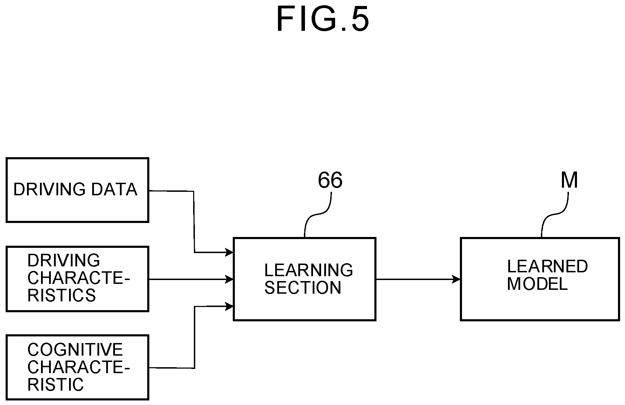

The learning section 66 illustrated in Fig. 4 has the function of generating a learned model M by machine learning. Concretely, as illustrated in Fig. 5, the learning section 66 acquires teacher data in which driving data, which serves as information relating to plural driving evaluation items, and correct answer values for the driving characteristics and the cognitive characteristic respectively, are set in correspondence with one another. Based on the acquired teacher data, when data relating to a driving evaluation item is inputted, the learning section 66 generates the learned model M that estimates individual characteristics that include driving characteristics and a cognitive characteristic. The driving characteristics and the cognitive characteristic are described hereafter.

Note that a deep neural network for example is used as the learned model M. LSTM (Long Short-Term Memory) that is a type of an RNN (Recursive Neural Network) is used as an example of the learned model M of the present embodiment. Further, for example, error back propagation is used in generating the learned model M. When driving data is inputted, the learned model M is generated due to the deep neural network model being machine-trained such that driving characteristics and the cognitive characteristic are outputted.

For example, diagnostic results of a diagnosis of the appropriateness of the driver that is carried out by an external organization such as the National Agency for Automotive Safety & Victims' Aid or the like may be used as the correct answer values of the driving characteristics. Further, test results of a test that evaluates cognitive functions such as the MMSE (Mini-Mental State Examination) or the like may be used as the correct answer value of the cognitive characteristic.

The individual characteristics estimating section 68 estimates individual characteristics of the driver based on driving data that includes the scores and that is acquired by the data acquiring section 62. Concretely, the individual characteristics estimating section 68 inputs the driving data acquired by the data acquiring section 62 into the learned model M generated at the learning section 66, and executes the computing processing of the learned model M, and thereby estimates the individual characteristics. Further, in the present embodiment, as an example, the individual characteristics estimating section 68 estimates driving characteristics and a cognitive characteristic as the individual characteristics.

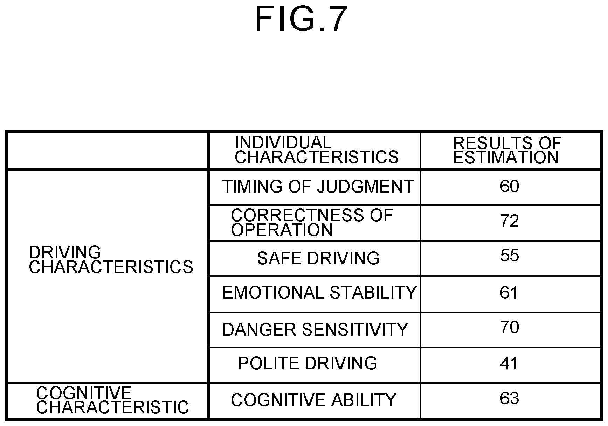

Here, examples of the driving characteristics and the cognitive characteristic that serve as the individual characteristics are explained with reference to Fig. 7. As illustrated in Fig. 7, in the present embodiment, timing of judgment, correctness of operation, safe driving, emotional stability, danger sensitivity, and polite driving are respectively estimated as the driving characteristics. The estimated results are calculated as scores from 0 to 100.

For the item of timing of judgment, a characteristic relating to the degree to which the driver can quickly judge the situation at the periphery of the vehicle V and the degree to which the driver can carry out an operation quickly is estimated. For the item that is correctness of operation, a characteristic relating to the degree of correctness of the operation of the vehicle V is estimated.

For the safe driving item, a characteristic relating to the degree to which the driver is mindful of safe driving is estimated. Further, for the emotional stability item, a characteristic relating to the degree of calmness without carrying out emotional driving is estimated. For the danger sensitivity item, a characteristic relating to the degree to which the driver can quickly judge a dangerous situation is estimated. For the polite driving item, a characteristic relating to the consideration that the driver gives to vehicles and pedestrians at the periphery of the own vehicle is estimated.

As the cognitive characteristic, a cognitive ability item is calculated as a score from 0 to 100.

Here, the individual characteristics management device 10 of the present embodiment stores the individual characteristics estimated by the individual characteristics estimating section 68 in the server 14 as the second data 15. Further, of this second data 15, only the data that is used during driving is transmitted to the storage 46 that is the first storage. For example, the individual characteristics management device 10 transmits the data of the timing of judgement, the correctness of operation, and the cognitive ability, among the second data 15, to the storage 46.

Based on the driving state of the user, the first data updating section 70 illustrated in Fig. 4 updates the first data 13 stored in the storage 46. In the present embodiment, as an example, the first data updating section 70 receives some of the second data 15 from the server 14 at the time of start-up of the vehicle V, and updates the first data 13 based on the received data.

Further, the first data updating section 70 updates the first data 13 at a predetermined period during driving. For example, the first data updating section 70 may update the first data 13 every one hour after starting of traveling of the vehicle V. Or, for example, the first data updating section 70 may update the first data 13 each time that 10 km is traveled after starting of traveling of the vehicle V.

The first data updating section 70 updates the first data 13 based on the individual characteristics estimated by the individual characteristics estimating section 68. Namely, during driving, the first data updating section 70 compares the individual characteristics estimated by the individual characteristics estimating section 68 and the first data 13 stored in the storage 46, and updates the differences.

At the time of stoppage of the vehicle V, the second data updating section 72 updates the second data 15 based on the updated first data 13 and the second data 15 that is stored in the server 14.

Specifically, when the vehicle V enters into a state in which its power is turned off, the second data updating section 72 receives, among the first data 13, only the data that was updated during driving, and updates the second data 15 based on the received first data 13.

### (Operation)

Operation of the present embodiment is described next.

### (Updating Processing)

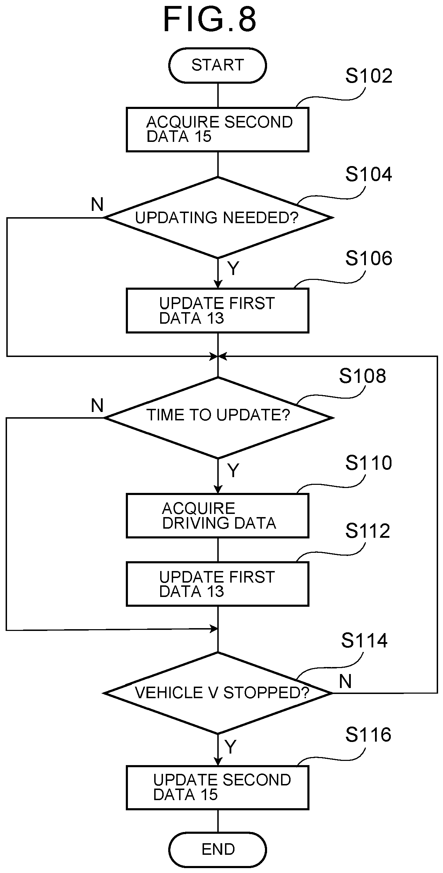

An example of the flow of updating processing by the individual characteristics management device 10 is described by using the flowchart shown in Fig. 8. Note that the updating processing is realized by the CPU 20 reading-out a program stored in the ROM 22 or the storage 26 and executing the program. Further, in the present embodiment, as an example, the updating processing is executed at the time when the vehicle V is started-up.

In step S102, the CPU 20 acquires the second data 15. Specifically, the CPU 20 acquires some of the second data 15 that is stored in the server 14. At this time, the CPU 20 acquires the second data 15 that relates to the individual characteristics of the user who is driving the vehicle V. For example, if an identification number of the user is registered in advance in a key for starting the vehicle V, the user may be specified from the identification number registered in the key that is used to start the vehicle V. Or, if biosensors are installed in the vehicle V, the user may be specified based on signals acquired by the biosensors. Moreover, the user may be specified from images of the driver detected by the camera 60 for the driver that is installed in the vehicle V.

In step S104, the CPU 20 judges whether or not the first data 13 must be updated. Specifically, if the second data 15 acquired from the server 14 and the first data 13 stored in the storage 46 match, the CPU 20 judges that updating of the first data 13 is unnecessary. If the second data 15 acquired from the server 14 and the first data 13 stored in the storage 46 are different, the CPU 20 judges that there is the need to update the first data 13. If it is judged that the first data 13 must be updated, the CPU 20 moves on to step S106, whereas if it is judged that there is no need to update the first data 13, the CPU 20 moves on to the processing of step S108.

In step S106, the CPU 20 updates the first data 13. Specifically, by the function of the first data updating section 70, the CPU 20 updates the first data 13 based on the second data 15 received from the server 14.

In step S108, the CPU 20 judges whether or not it is time to update the first data 13. Specifically, the CPU 20 judges whether or not the preset update time has been received. For example, in a case in which the first data 13 is updated every one hour after starting of traveling of the vehicle V, the CPU 20 starts counting by a timer from the time of the last update, and judges that it is the update time when one hour has elapsed. Or, for example, in a case in which the first data 13 is updated each time that the vehicle V travels 10 km after the start of traveling, the CPU 20 measures the traveled distance from the time of the last update, and judges that it is the update time when the vehicle V has travelled 10 km.

If the CPU 20 judges in step S108 that it is the time for updating the first data 13, the CPU 20 moves on to the processing of step S110. Further, if the CPU 20 judges in step S108 that it is not time to update the first data 13, the CPU 20 moves on to the processing of step S114.

In step S 110, the CPU 20 acquires driving data detected by various sensors of the vehicle V. In step S112, the CPU 20 updates the first data 13 based on the acquired driving data. The updated first data 13 is stored in the storage 46.

In step S114, the CPU 20 judges whether or not the vehicle V is stopped. In the present embodiment, as an example, the CPU 20 judges that the vehicle V is stopped in a case in which the operation for turning the power of the vehicle V off is carried out by the user. If the CPU 20 judges that the vehicle V is stopped, the CPU 20 moves on to the processing of step S116. Further, if the CPU 20 judges that the vehicle V is not stopped, i.e., judges that there is a state in which the power of the vehicle V is on, the CPU 20 returns to the processing of step S108, and judges whether or not it is the time to update the first data 13.

In step S116, the CPU 20 updates the second data 15. Specifically, by the function of the second data updating section 72, the CPU 20 receives only the data that was updated during driving among the first data 13, and updates the second data 15 based on the received first data 13.

As described above, in accordance with the individual characteristics management system S that is provided with the individual characteristics management device 10 relating to the present embodiment, the first data 13 that relates to individual characteristics of the user is stored in the storage 46 that is the first storage, and the second data 15 that relates to the individual characteristics of the user is stored in the server 14 that is the second storage. Moreover, the first data 13 and the second data 15 are respectively updated by the ECU 16 based on the driving state of the user. Here, during driving by the user, the ECU 16 updates the first data 13 based on the driving state. By storing the first data 13 in the vehicle V in this way, the processing load of the vehicle V at the time of referencing the individual characteristics can be reduced as compared with a structure in which all of the data relating to the individual characteristics is stored at the exterior of the vehicle V.

Further, the ECU 16 updates the second data 15 based on the updated first data 13 and the second data 15 that is stored in the server 14. Due thereto, the second data 15, which relates to the individual characteristics and is stored in the server 14 that is at the exterior of the vehicle V, can be updated periodically, and detailed individual characteristics can be obtained based on this second data 15.

Moreover, because the individual characteristics management device 10 of the present embodiment updates the second data 15 at the time when a predetermined state is reached, the first data 13 can be transmitted to the server 14 while avoiding a situation in which there is a large amount of communication of the vehicle V. In particular, in the present embodiment, because the second data 15 is updated at the time when the vehicle V is stopped, the first data 13 can be transmitted to the server 14 in a state in which communication for vehicle control is not being carried out.

Still further, in the present embodiment, the individual characteristics management device 10 transmits to the server 14 only the first data 13 that is updated during driving. Therefore, at the time of stoppage of the vehicle V, the amount of communication between the vehicle V and the server 14 can be kept to the minimum needed.

Further, in the present embodiment, by updating the first data 13 at the time of start-up of the vehicle V, the individual characteristics management device 10 can, at the time when driving starts, always manage the individual characteristics based on the first data 13 that is the most recent. Moreover, because only the data that is used during driving among the second data 15 is transmitted to the storage 46, the amount of communication between the vehicle V and the server 14 at the time of start-up of the vehicle V can be kept to the minimum needed.

Still further, in the present embodiment, by updating the first data 13 by using the learned model on which machine learning has been carried out, the individual characteristics can be obtained highly accurately without requiring complex computation.

Although the individual characteristics management system S and the individual characteristics management device 10 relating to an embodiment have been described above, the technique of the present invention can, of course, be implemented in various forms within a scope that does not depart from the present invention. For example, although the individual characteristics management device 10 is provided at the exterior of the vehicle V in the above-described embodiment, the present invention is not limited to this and may be structured such that the individual characteristics management device 10 is installed in the vehicle V. In this case, the individual characteristics management device 10 may acquire the driving data directly from the vehicle V, without the driving data of the vehicle V being transmitted to the server 14.

Further, the score calculating processing by the score calculating section 64 may be executed within the individual characteristics management device 10, or the necessary data may be transmitted to the server 14 and the score calculating processing executed at the server 14 side. Moreover, the individual characteristics estimating processing by the individual characteristics estimating section 68 may be executed within the individual characteristics management device 10, or the necessary data may be transmitted to the server 14 and the individual characteristics estimating processing executed at the server 14 side. In cases in which the score calculating processing and the individual characteristics estimating processing are executed at the server 14 side, the data such as the formulas and the like needed for score calculation, and the learned model M, may be stored in the server 14.

Moreover, in the above-described embodiment, the individual characteristics estimating section 68 and the first data updating section 70 estimate the individual characteristics by inputting the driving data and the like into the learned model M and executing computing processing of the learned model M. However, the present invention is not limited to this. For example, individual characteristics may be estimated without using the learned model M. In this case, a method may be used in which a table, in which the individual characteristics and the scores and number of times of measurement of the driving data are associated with one another, is stored in advance, and the individual characteristics are estimated by referring to this table.

Still further, although the above embodiment describes a structure in which driving characteristics and a cognitive characteristic are estimated as the individual characteristics, the present invention is not limited to this. For example, in addition to the driving characteristics and the cognitive characteristic, psychological characteristics, visual functions, and states of health may be estimated as individual characteristics. Intellectual curiosity, conscientiousness, extroversion, cooperativity, emotional instability and the like are included as psychological characteristics. Static vision, dynamic vision, night vision, horizontal field of vision and the like are included as visual functions.

Further, in the above-described embodiment, data that includes acceleration operations, braking operations, steering operations, dangerous operations, compliance with signals, compliance with signs, and the driver state are used as the driving data, but the present invention is not limited to this. For example, some of the above-described data may be used as the driving data. Or, in addition to the above-described data, data that includes the absence/presence of road rage, the absence/presence of deviating from the vehicle lane, the absence/presence of minor collisions, or the like may be used as the driving data.

Moreover, although the above-described embodiment is structured such that the second data 15 is updated at the time when the vehicle V is stopped, the present invention is not limited to this. For example, the second data 15 may be updated at the time when the vehicle V is at a halt. Or, for example, the second data 15 may be updated at the time when the shift position is the park position. Even in such cases, the traveling of the vehicle V is not affected by the updating of the second data 15. Namely, the processing load of the ECU 16 can be reduced as compared with a case in which the second data 15 is updated during traveling of the vehicle V.

Moreover, the above-described embodiment is structured such that, at the time when the vehicle V starts-up, some of the second data 15 is transmitted to the ECU 16 of the vehicle V, and the first data 13 is updated. However, the present invention is not limited to this. For example, after the second data 15 is updated by the second data updating section 72 at the time when the vehicle V is stopped, some of the updated second data 15 may be transmitted to the ECU 16 of the vehicle V, and the first data 13 may be updated. In this case, in the state before the starting-up of the vehicle V, the first data 13 is in a state of being the most recent data, and therefore, the processing load at the time of start-up of the vehicle V can be reduced.

Further, any of various types of processors other than the CPU 20 may execute the processing that is executed due to the CPU 20 reading-in a program in the above-described embodiment. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the above-described processing may be executed by one of these various types of processors, or may be executed by a combination of two or more of the same type or different types of processors, e.g., plural FPGAs, or a combination of a CPU and an FPGA, or the like. Further, the hardware structures of these various types of processors are, more specifically, electrical circuits that combine circuit elements such as semiconductor elements and the like.

Moreover, although the above-described embodiment is structured such that the various data are stored in the storage 26 and the storage 46, the present invention is not limited to this. A non-transitory recording medium such as, for example, a CD (Compact Disk), a DVD (Digital Versatile Disk), a USB (Universal Serial Bus) memory, or the like may be used as the storage. In this case, various programs and data and the like are stored on these recording media.

## Claims

1. An individual characteristics management system (S) comprising:
first storage (46) installed at a vehicle and storing first data (13) relating to individual characteristics of a user;
second storage (14) provided at an exterior of the vehicle and storing second data (15) relating to the individual characteristics; and
a controller (16) updating the first data (13) and the second data (15) respectively based on a driving state of the user,
wherein the controller (16) updates, during driving by the user and based on a driving vehicle, the first data stored in the first storage, and updates the second data based on the updated first data and the second data stored in the second storage,
**characterised in that**:
the controller (16) updates the second data (15) in a case in which the vehicle is stopped; and
in a case in which the vehicle is stopped, the controller (16) transmits to the second storage (14) only data, which was updated during driving, from among the first data (13).

2. The individual characteristics management system of claim 1, wherein the controller (16) updates the first data (13) by inputting driving data, which is obtained from sensors during driving, to a learned model on which machine learning has been carried out, and executing computing processing of the learned model.

## Patentansprüche

1. Ein System (S) für die Verwaltung individueller Merkmale, umfassend:
einen ersten Speicher (46), der in einem Fahrzeug installiert ist und erste Daten (13) speichert, die sich auf individuelle Merkmale eines Benutzers beziehen;
einen zweiten Speicher (14), der an einer Außenseite des Fahrzeugs bereitgestellt ist und zweite Daten (15) speichert, die sich auf die individuellen Merkmale beziehen; und
eine Steuervorrichtung (16), die die ersten Daten (13) beziehungsweise die zweiten Daten (15) auf Grundlage eines Fahrzustands des Benutzers aktualisiert,
wobei die Steuervorrichtung (16) während des Fahrens durch den Benutzer und auf Grundlage eines fahrenden Fahrzeugs die ersten Daten aktualisiert, die in dem ersten Speicher gespeichert sind, und die zweiten Daten auf Grundlage der aktualisierten ersten Daten und den zweiten Daten, die in dem zweiten Speicher gespeichert sind, aktualisiert,
**dadurch gekennzeichnet, dass**:
die Steuervorrichtung (16) die zweiten Daten (15) in einem Fall aktualisiert, in dem das Fahrzeug angehalten hat; und
die Steuervorrichtung (16) in einem Fall, in dem das Fahrzeug angehalten hat, nur Daten, die während der Fahrt aktualisiert wurden, aus den ersten Daten (13) an den zweiten Speicher (14) überträgt.

2. System für die Verwaltung individueller Merkmale nach Anspruch 1, wobei die Steuervorrichtung (16) die ersten Daten (13) aktualisiert, indem sie Fahrdaten, die von Sensoren während der Fahrt erhalten werden, in ein gelerntes Modell, an dem maschinelles Lernen durchgeführt wurde, eingibt und die Rechenverarbeitung des gelernten Modells ausführt.

## Revendications

1. Système de gestion de caractéristiques individuelles (S) comprenant :
une première mémoire (46) installée sur un véhicule et stockant des premières données (13) relatives aux caractéristiques individuelles d'un utilisateur,
une deuxième mémoire (14) prévue à un emplacement autre que le véhicule et stockant des deuxièmes données (15) relatives aux caractéristiques individuelles, et
un dispositif de commande (16) actualisant les premières données (13) et les deuxièmes données (15) respectives compte tenu de l'état de conduite de l'utilisateur ;
ledit dispositif de commande (16) actualisant, pendant que l'utilisateur conduit et compte tenu d'un véhicule conduit, les premières données stockées dans la première mémoire, et actualisant les deuxièmes données compte tenu des premières données actualisées et des deuxièmes données stockées dans la deuxième mémoire ;
**caractérisé en ce que** :
le dispositif de commande (16) actualise les deuxièmes données (15) dans le cas où le véhicule est à l'arrêt, et
dans le cas où le véhicule est à l'arrêt, le dispositif de commande (16) transmet à la deuxième mémoire (14) uniquement celles des premières données (13) qui ont été actualisées pendant la conduite.

2. Système de gestion de caractéristiques individuelles selon la revendication 1, dans lequel le dispositif de commande (16) actualise les premières données (13) en introduisant des données de conduite, obtenues à partir de capteurs pendant la conduite, dans un modèle appris sur lequel un apprentissage automatique a été effectué, et en réalisant un traitement informatique du modèle appris.
